# EUROPEAN PATENT SPECIFICATION

(11) **EP 0 744 327 B1**
(45) Date of publication and mention of the grant of the patent: **03.11.1999**
(21) Application number: 96107242.8
(22) Date of filing: 08.05.1996
(51) Int. Cl.: B60T 3/00

(54) **Car blocking chock**
Wagenblockierkeil
Cale de blocage d'une voiture

(30) Priority: 19.05.1995 IT TO950120 U
(43) Date of publication of application: 27.11.1996
(73) Proprietor: OFFICINA MECCANICA MIGLIORE LIVIO, 10026 Santena (Prov. Torino) (IT)
(72) Inventor: Migliore, Livio, 10026 Santena (Prov. of Torino) (IT)
(74) Representative: Buzzi, Franco

(56) References cited:
- FR-A- 2 481 663
- US-A- 3 054 477
- US-A- 3 065 827

## Description

The present invention relates to a so called car blocking chock.

By the term "blocking chock" a wedge-like device is intended which may be placed under the wheel of a vehicle to prevent it from rolling downward on a grade or to prevent any movement of the vehicle from the position in which it was blocked, if the emergency hand brakes of the vehicle fail to operate. Said known devices are either made from a block of wood or by a wedge shaped element made from sheet iron.

The main requirements of the said blocking chocks may be summarized as follows:
1) To exhibit a sufficient mechanical strength in order to sustain the weight of the vehicle at any reasonable grade condition.
2) To develop a sufficient force of friction between the surface of the chock bearing on the ground and the ground in order to avoid that the chock be shifted whenever the wheel of the vehicle comes into contact with the wedge-shaped surface of the chock.

The known chocks do not fulfill particularly the above mentioned second requirement.

In order to assure that the prior art chocks be not shifted whenever coming into contact with the wheel of the vehicle, it was necessary to provide them on their side bearing against the ground with serrations or teeths which are apt to penetrate the ground.

However, the presence of serrations is objectionable, since they are increasing the tendency of the chock to slide backward on hard ground, and are very detrimental whenever used on tar-finished ground.

Known is in the art from US-A-3065827 a blocking chock for vehicles corresponding to the preamble of claim 1. This chock is not suitable for use with tires having different tread widths.

It is therefore the main object of the present invention to provide a blocking chock for vehicles which will obviate to the drawbacks of the prior art devices, and which will provide a device which is safe and reliable in operation under all circumstances.

According to the invention, the above object is obtained by providing a wedge-shaped device of the above-referenced type, suitable for use as a braking chock for vehicles, and characterized in that at least one third connecting rod is secured between the longer sloping side of said side plates at an intermediate position between the two vertices delimiting said side.

Advantageously, said rod shaped elements are secured to the side plates by welding.

According to a further feature of the invention, said rod like elements are tubular elements.

Advantageously, said rod like elements may have a non-circular cross section, or also an open channel-like cross section.

According to a still further feature of the invention, the rod-like element connecting the acute vertices of said side plates has a diameter smaller than the diameter of the remaining rod like connecting elements.

Further objects and advantages of the device according to the invention will be evident from the following description of some preferred embodiments of the invention, made with reference to the accompanying drawings, in which:
Figure 1 is a side view of a blocking chock according to a first embodiment of the invention.
Figure 2 is a plan view of the chock of Figure 1.
Figure 3 is a front view of the chock of Figures 1 and 2.
Figure 4 is a front view of the chock according to Figures 1 to 3, partially sectioned along the plane of line IV-IV of Figure 1, and
Figures 5, 6, 7 and 8 are perspective views of four different embodiments of the blocking chock according to the invention.

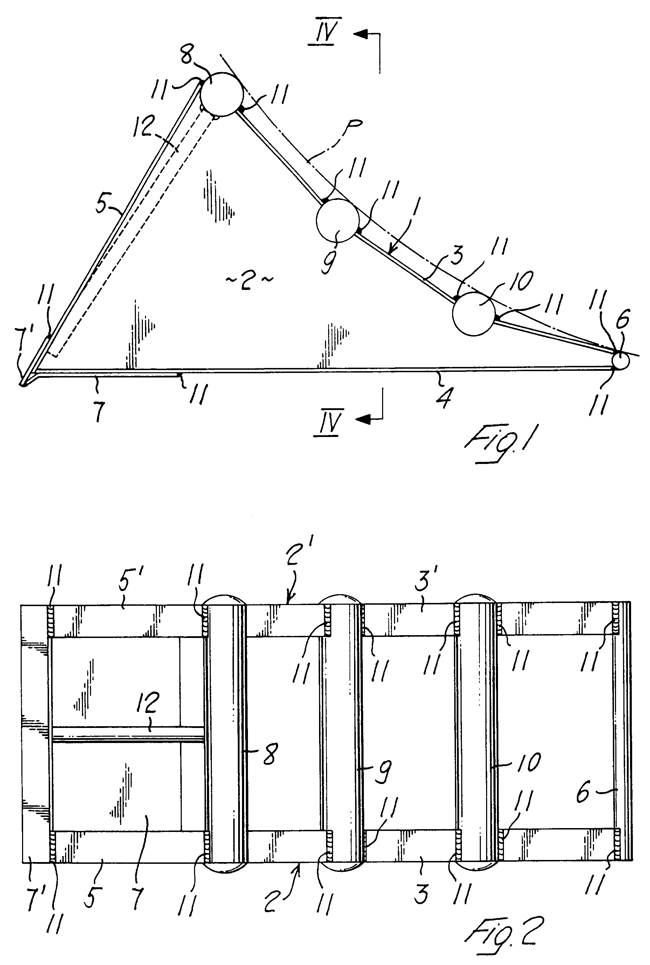

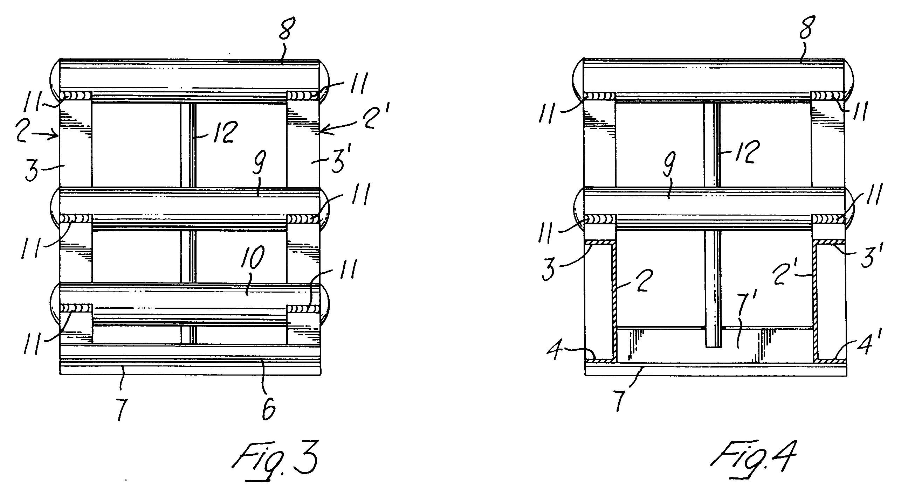

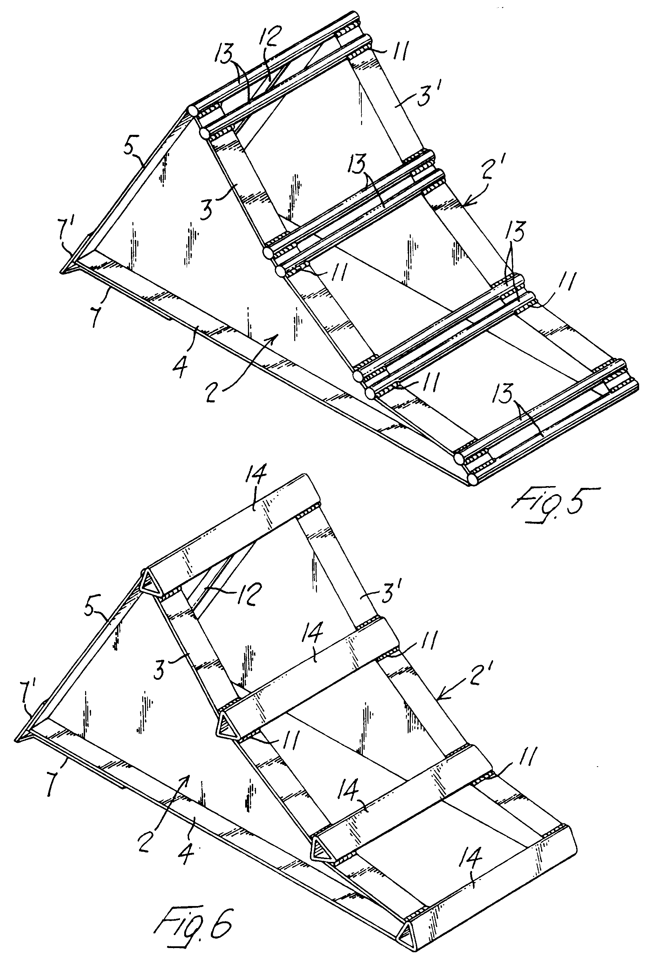

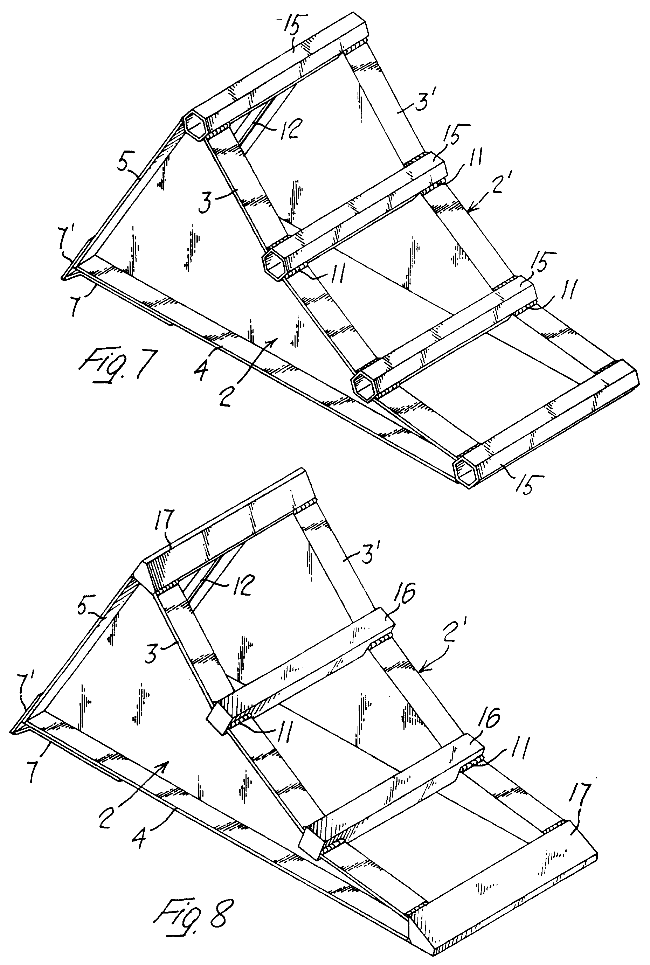

With reference to Figures 1 to 4 of the drawings, the blocking chock 1 shown comprises two side plates 2 and 2' each having a substantially triangular profile, in the case shown the profile of a scalene triangle, although they could also have the profile of a right triangle as well.

The three sides of the plates 2, 2' are bent outwardly at right angles with respect to the plane of the plates 2, 2' thus forming the peripheral reinforcing rims 3, 3'; 4, 4' and 5, 5'.

The two side plates 2, 2' are connected together so as to form the wedge-shaped element 1 by means of a set of connecting elements having each a length substantially corresponding to the width of the tread of a tire of the vehicle with which the said blocking chock has to be used, as explained below.

The vertices of the plates 2, 2' comprised between the rims 3, 4 and 3',4', that is the acute angle vertices are connected together by a rod like element 6 of comparatively small diameter. The vertices of the said plates comprised between the rims 4, 4' and 5, 5' are connected together by a section plate 7, advantageously provided at its corner portion with a downwardly extending tooth-like element 7'.

The third remaining vertices of the plates 2,2' are connected together by a rod-like element 8, of a diameter substantially greater than the diameter of the rod 6, for instance a diameter which is three to four times greater than the diameter of rod 6.

The sloping sides of the plates 2, 2' comprised between the rods 6 and 8 are further connected together by means of a number, and for instance two rod like elements 9 and 10 similar to element 8, disposed at substantially equispaced intervals along said sides. Advantageously, all the said connecting elements 6, 7, 8, 9 and 10 are connected to the plates 2, 2' by weld beads 11.

The device is completed by a strut element 12, which is secured by welding at an intermediate position between the rod like element 8 and the profiled element 7, for the scope which will be described below.

The operation of the described device will be evident.

Whenever the chock 1 is disposed beneath the tire P of the wheel of a vehicle, the first element that the tire encounters by moving into contact with the chock 1 is the rod 6. Since the ratio between the radiuses of curvature of the tire P and of the rod 6 is very great, and for instance it is greater than 60, it follows that the component perpendicular to the bearing plane is always much greater than the component parallel to said plane, which latter component is the one which tend to shift the chock, and therefore also in presence of a reduced friction coefficient due to a smooth bearing surface and/or to a great grade, the chock is locked firmly in its starting position when the tire P comes into contact with the rod 6.

During the further movement of the tire P until reaching its final stable equilibrium position (position shown by dot-and-dash lines in Figure 1) between weight of the vehicle and reaction of the wedge-like chock 1, the tire comes into contact with the other tubular elements 10 and 9 of the chock 1, and also in respect of these elements the component of force perpendicular to the bearing plane will be always greater than the component parallel to said plane, and therefore the chock 1 will maintain its stable position.

The element 12 is used as a handgrip for grasping the chock.

In Figures 5 to 8 some other embodiments of the invention are shown, according to which the shape of the rod-shaped connecting elements is varied. Thus, according to the embodiment of Figure 5, the rods 8, 9 and 10 of the embodiment of Figures 1 to 4 have been each substituted by a pair of parallel rods 13 of minor diameter.

According to the embodiment of Figure 6, the said rods have been substituted by tubular rods 14 of triangular cross-section. According to the embodiment of Figure 7, said rods have been substituted by tubular rods 15 of hexagonal cross section, and finally according to the embodiment of Figure 8, the intermediate rods have been substituted by bars 16 of square cross section and the two terminal rods have been substituted by bars 17 of wedge-like cross section.

Thanks to the fact that the chock of the present invention is formed by an "open" structure, it will be easy to provide a chock-holder of simple construction, by using the rod-like elements of the chock as male/female elements which may be hung to a suitable structure (not shown).

Thanks to the fact that the chock according to the invention is formed by an "open" structure comprising two side walls 2,2' connected together by a rod 6 and by three pipes 8, 9 and 10, a structure is realized of equal mechanical strangth but of lower weight with respect to the prior art structures, and thus more handy, which is a further advantage.

## Claims

1. A Wedge-shaped device (1) suitable for use as a blocking chock for vehicles, comprising two substantially triangular side plates (2, 2') made from sheet iron and means (6, 7, 8, 9, 10, 13, 14, 15, 16, 17) for connecting said Side plates (2, 2') together in a spaced-apart condition, said connecting means (6, 7, 8, 9, 10, 13, 14, 15, 16, 17) being formed by rod-shaped elements two of which are secured to the two vertices of said triangular side plates (2, 2') defining the longer sloping side of said plates, means (7, 7') being provided for connecting together the third vertices of said plates (2, 2'), characterized by the fact that at least one third connecting rod is secured between the longer sloping side of said side plates at an intermediate position between the two vertices delimiting said side.

2. A device according to claim 1, in which said rod-shaped elements (6, 8, 9, 10, 13, 14, 15, 16, 17) are secured to the side plates (2, 2') by welding.

3. A device according to claims 1 or 2, in which said rod-shaped elements (8, 9, 10, 14, 15,) are tubular elements.

4. A device according to claims 1 to 3 in which said rod-shaped elements (14, 15, 16, 17) have a non-circular cross section.

5. A device according to claims 1 to 5, in which the said rod-shaped elements have an open channel-like cross section.

6. A device according to any one of the preceding claims, in which the rod-like element (6) connecting the acute vertices of said side plates (2, 2') has a smaller cross section than the cross section of the remaining rod like connecting elements (8, 9, 10).

7. A device according to any one of the preceding claims in which the third vertices of said plates (2, 2') are connected together by a profiled plate like element (7, 7') secured to said plates by welding.

8. A device according to any one of the preceding claims in which the two elements connecting the vertices opposed to the acute vertex of the said device are connected together by an intermediate strut-like element (12).

## Patentansprüche

1. Keilförmige Vorrichtung (1), geeignet zur Verwendung als Bremsklotz bzw. Bremsblock für Fahrzeuge, aufweisend zwei im wesentlichen dreieckige Seitenplatten (2, 2'), die aus Blatteisen gemacht sind, und Einrichtungen (6, 7, 8, 9, 10, 13, 14, 15, 16, 17) zum Verbinden der Seitenplatten (2, 2') zusammen in einem beabstandeten Zustand, wobei die Verbindungseinrichtungen (6, 7, 8, 9, 10, 13, 14, 15, 16, 17) durch stabförmige Elemente gebildet sind, von denen zwei mit den zwei Scheitelpunkten der dreieckigen Seitenplatten (2, 2') verbunden sind, welche die längere Schrägseite der Platten definieren, wobei Einrichtungen (7,7') vorgesehen sind zum Verbinden der drei Scheitelpunkte der Platten (2, 2') zusammen, gekennzeichnet durch den Umstand, daß wenigstens ein dritter Verbindungsstab verbunden ist zwischen der längeren Schrägseite der Seitenplatten in einer mittleren Position zwischen den zwei Scheitelpunkten, welche die Seite begrenzen.

2. Vorrichtung nach Anspruch 1, in welcher die stabförmigen Elemente (6, 8, 9, 10, 13, 14, 15, 16, 17) durch Schweißen mit den Seitenplatten (2, 2') verbunden sind.

3. Vorrichtung nach Ansprüchen 1 oder 2, in welcher die stabförmigen Elemente (8, 9, 10, 14, 15) rohrförmige Elemente sind.

4. Vorrichtung nach Ansprüchen 1 bis 3, in welcher die stabförmigen Elemente (14, 15, 16, 17) einen nicht-kreisförmigen Querschnitt haben.

5. Vorrichtung nach Ansprüchen 1-5, in welcher die stabförmigen Elemente einen offenen kanalartigen Querschnitt haben.

6. Vorrichtung nach einem der vorangegangenen Ansprüche, in welcher das stabförmige Element ( 6 ), welches die spitzen Scheitelpunkte der Seitenplatten (2,2') verbindet, einen kleineren Querschnitt hat als der Querschnitt der verbleibenden stabartigen Verbindungselemente (8, 9, 10).

7. Vorrichtung nach einem der vorangegangenen Ansprüche, in welcher die dritten Scheitelpunkte der Platten (2, 2') miteinander verbunden sind durch ein profiliertes plattenartiges Element ( 7, 7'), welches durch Schweißen an den Platten befestigt ist.

8. Vorrichtung nach einem der vorangegangen Ansprüche, in welcher die zwei Elemente, welche die Scheitelpunkte verbinden, die dem spitzen Scheitelpunkt der Vorrichtung gegenüberliegen, mit einander durch ein mittleres strebenartiges Element (12) verbunden sind.

## Revendications

1. Dispositif en forme de soin (1) adapté à une utilisation comme cale de blocage pour des véhicules, comportant deux plaques latérales sensiblement triangulaires (2, 2') fabriquées à partir de tôle et des moyens (6, 7, 8, 9, 10, 13, 14, 15, 16, 17) destinés à relier lesdites plaques latérales (2, 2') ensemble dans une condition espacée, lesdits moyens de raccordement (6, 7, 8, 9, 10, 13, 14, 15, 16, 17) étant formés par des éléments en forme de tige dont deux sont fixés aux deux sommets desdites plaques latérales triangulaires (2, 2') définissant le côté incliné plus long desdites plaques, des moyens étant prévus pour raccorder ensemble les troisièmes sommets desdites plaques latérales (2, 2'), caractérisé par le fait qu'au moins une troisième tige de raccordement est fixée entre le côté incliné plus long desdites plaques latérales dans une position intermédiaire entre les deux sommets délimitant ledit côté.

2. Dispositif selon la revendication 1, dans lequel lesdits éléments en forme de tige (6, 8, 9, 10, 13, 14, 15, 16, 17) sont fixés sur les plaques latérales (2, 2') par soudage.

3. Dispositif selon les revendications 1 ou 2, dans lequel lesdits éléments en forme de tige (8, 9, 10, 14, 15) sont des éléments tubulaires.

4. Dispositif selon les revendications 1 à 3, dans lequel lesdits éléments en forme de tige (14, 15, 16, 17) ont une section non circulaire.

5. Dispositif selon les revendications 1 à 5, dans lequel lesdits éléments en forme de tige ont une section en forme de canal ouvert.

6. Dispositif selon l'une quelconque des revendications précédentes, dans lequel l'élément en forme de tige (6) reliant les sommets aigus desdites plaques latérales (2, 2') a une section plus petite que la section des éléments de raccordement en forme de tige (8, 9, 10) restants.

7. Dispositif selon l'une quelconque des revendications précédentes, dans lequel les troisièmes sommets desdites plaques (2, 2') sont reliés ensemble par un élément en forme de plaque profilée (7, 7') fixée sur lesdites plaques par soudage.

8. Dispositif selon l'une quelconque des revendications précédentes, dans lequel les deux éléments reliant les sommets opposés au sommet aigu dudit dispositif sont reliés ensemble par un élément intermédiaire en forme de jambe de force (12).
